# EUROPEAN PATENT APPLICATION

(11) **EP 3 200 084 A1**
(43) Date of publication of application: **02.08.2017**
(21) Application number: 14902327.7
(22) Date of filing: 29.11.2014
(51) Int. Cl.: G06F 12/14

(54) **DATA READING/WRITING METHOD OF DUAL-SYSTEM TERMINAL AND DUAL-SYSTEM TERMINAL**

(30) Priority: 28.09.2014 CN 201410508564
(71) Applicant: Yulong Computer Telecommunication Scientific (Shenzhen) Co. Ltd., Shenzhen, Guangdong 518057 (CN)
(72) Inventor: REN, Yong, Shenzhen Guangdong 518057 (CN); JU, Zhitao, Shenzhen Guangdong 518057 (CN)
(74) Representative: Thibon, Laurent
(86) International application number: PCT/CN2014/092615
(87) International publication number: WO 2016/045189

(57) **Abstract**

The present disclosure provides a data reading/writing method of a dual-system terminal and a dual-system terminal. The dual-system terminal includes: an area partition module, configured to partition a data storage area of the dual-system terminal into a secure storage area and a normal storage area according to a preset rule; an area mounting module, configured to mount the secure storage area and the normal storage area when being operated in a secure system, and mount the normal storage area when being operated in a normal system; and an instruction receiving module, configured to receive an operation instruction, issued by a user in the secure system, of performing data reading/writing in the secure storage area and normal storage area; or, to receive an operation instruction, issued by the user in the normal system, of performing data reading/writing in the normal storage area. The solution solves a problem in dual-system terminal that since important contents of a secure system can also be read/written in a normal system, the privacy data is likely to be revealed, and prevents the problem that data in a dual-system terminal is likely to be revealed.

## Description

### TECHNICAL FIELD

The present disclosure relates to the technical field of electronic communications, in particular to a data reading/writing method of a dual-system terminal and a dual-system terminal.

### BACKGROUND

With a rapid development of terminal technologies, users increasingly prefer to install two systems on a terminal to pursue a relative diversified interface effect. As a result, the user can perform a switch between the two systems to meet his/her different operation experience or interface effect when he/she is tired of the interface or operation mode of one system. However, in the related art, a dual-system terminal fails to read/write data securely with effective use of functions of the dual-system regarding data preservation. Typically, contents such as pictures, video and audio files and emails are stored in an external storage card (such as a SD card) of the dual-system terminal or an expanded storage device built in the terminal by the user regardless of whether the contents are important. However, no matter which one of the two systems is operated by the user, all contents in the data storage area of the dual-system terminal can be read/wrote. As a result, except for different interfaces, there is no difference between the two systems in data storage, there is no essential difference. At present, the terminal system is divided into a normal system and a secure system by some users according to their own preferences, while the storage areas are on a same medium. Therefore, the contents of the secure system can also be read/wrote in the normal system. As a result, private data is likely revealed, the benefit of the user is affected and the effect desired by the user can not be achieved.

### SUMMARY

The present disclosure provides a data reading/writing method of a dual-system terminal and a dual-system terminal, so as to solve a problem that the important contents of the secure system in the dual-system terminal can also be read/wrote in the normal system and private data is likely revealed.

In order to solve the above problem, the present disclosure employs the following technical solutions:

A dual-system terminal, includes:
an area partitioning module, configured to partition a data storage area of the dual-system terminal into a secure storage area and a normal storage area according to a preset rule;
an area mounting module, configured to mount the secure storage area and the normal storage area in a secure system, and mount the normal storage area in a normal system; and
an instruction receiving module, configured to receive an operation instruction, issued by a user in the secure system, of performing data reading/writing in the secure storage area and the normal storage area; or, to receive an operation instruction, issued by the user in the normal system, of performing data reading and writing in the normal storage area.

Further, the dual-system terminal further includes: an encryption module, configured to encrypt the secure storage area, and transmit encrypted password information to an account corresponding to the dual-system terminal in a cloud information management platform to save;
an information transceiving module, configured to transmit a request for password information to the cloud information management platform, and receive the password information transmitted from the cloud information management platform; and
a decryption module, configured to decrypt the secure storage area according to the password information received by the information transceiving module.

The instruction receiving module is further configured to receive an operation instruction, issued by the user, of performing data reading and writing in the secure storage area if the secure storage area is decrypted by the decryption module.

Further, the encryption module specifically includes: an identification code acquisition sub-module, configured to acquire an identification code of a data storage area corresponding to the secure storage area; an encryption sub-module, configured to encrypt the secure storage area by taking the identification code acquired by the identification code acquisition sub-module as a password of the secure storage area; and an information transmitting sub-module, configured to transmit the identification code acquired by the identification code acquisition sub-module to the account corresponding to the dual-system terminal in the cloud information management platform as the password information.

The decryption module is specifically configured to acquire the identification code of the data storage area corresponding to the secure storage area, and compare the identification code with the password information received by the information transceiving module. The secure storage area is descripted if the identification code and the password information are identical.

Further, the information transceiving module is further configured to transmit a request for updating information to the account corresponding to the dual-system terminal in the cloud information management platform.

Further, the data storage area includes an external storage card and/or a built-in storage area disposed in the terminal.

A data reading and writing method of a dual-system terminal, includes:
partitioning a data storage area of the dual-system terminal into a secure storage area and a normal storage area according to a preset rule;
mounting the secure storage area and the normal storage area in a secure system, and mounting the normal storage area in a normal system;
receiving an operation instruction, issued by a user in the secure system, of performing data reading/writing in the secure storage area and the normal storage area; or, receiving an operation instruction, issued by the user in the normal system, of performing data reading/writing in the normal storage area.

Further, after the step of partitioning a data storage area of the dual-system terminal into a secure storage area and a normal storage area according to a preset rule, the method further comprises: encrypting the secure storage area and transmitting an encrypted password information to an account corresponding to the dual-system terminal in a cloud information management platform to save,
before performing a data reading/writing operation in the secure storage area , the method further comprises: transmitting a request for password information to the cloud information management platform and receiving the password information transmitted from the cloud information management platform; and decrypting the secure storage area according to the password information, and performing an operation of data reading/writing in the secure storage area if the secure storage area is decrypted.

Further, the step of encrypting the secure storage area and transmitting an encrypted password information to an account corresponding to the dual-system terminal in a cloud information management platform specifically comprises: acquiring an identification code of a data storage area corresponding to the secure storage area; encrypting the secure storage area by taking the identification code as a password of the secure storage area; and transmitting the password of the secure storage area to the account corresponding to the dual-system terminal in the cloud information management platform as the password information;
before performing a data reading/writing operation in the secure storage area and the normal storage area, the method further comprises: acquiring an identification code of the secure storage area; transmitting a request for password information to the cloud information management platform and receiving the password information transmitted from the cloud information management platform; and comparing the identification code with the password information, wherein the secure storage area is decrypted if the identification code and the password information are identical.

Further, the method further includes transmitting a request for updating information to the account corresponding to the dual-system terminal in the cloud information management platform.

Further, the data storage area specifically comprises an external storage card and/or a built-in storage area disposed in the dual-system terminal.

The present disclosure provides a data reading/writing method of a dual-system terminal and a dual-system terminal. The data storage area of the dual-system terminal is partitioned according to a preset rule to a secure storage area and a normal storage area, and mounting of the secure storage area and normal storage area can be achieved in the secure storage area, while only the normal storage area can be mounted in the normal system. As a result, the user can perform data reading/writing operation on both secure storage area and normal storage area in the secure system, while the user can only perform data reading/writing operation on the normal storage area in the normal system. Thus, it is realized that in a dual-system terminal, the data reading/writing operation cannot be performed in the normal system on the secure storage area of the secure system due to the difference of the secure system and the normal system, and the revealing of user's privacy is prevented. At the same time, the data reading/writing between systems of the dual-system terminal is realized, and the user's experience is improved.

Further, an encryption process can be performed to the secure storage area, the password of the secure storage area is the unique identification code of the data storage area corresponding to the secure storage area, and the password is uploaded to the account corresponding to the dual-system terminal in the management platform for cloud information. When data reading/writing operation on the secure storage area is required, it is required to acquire the identification code of the secure storage area again and compare the identification code with the password stored in the account of the dual-system terminal, the secure storage area is allowed to be operated on only when the identification code and the password are identical. Furthermore, a secure effect of the secure storage area is improved, and leverage is added to the using interest of the user.

### BRIEF DESCRIPTION OF DRAWINGS

Figure 1 is a structural diagram showing a dual-system terminal according to an embodiment of the present disclosure;
Figure 2 is a structural diagram showing a dual-system terminal according to another embodiment of the present disclosure;
Figure 3 is a structural diagram showing an encryption module according to an embodiment of the present disclosure;
Figure 4 is a flowchart of a data reading/writing method of the dual-system terminal according to an embodiment of the present disclosure;
Figure 5 is a flowchart of a method for encrypting the secure storage area according to an embodiment of the present disclosure; and
Figure 6 is a flowchart of a method for decrypting the secure storage area after the secure storage area is encrypted according to an embodiment of the present disclosure.

### DETAILED DESCRIPTION

The present disclosure will be described in detail below in combination with accompanying drawings and specific embodiments.

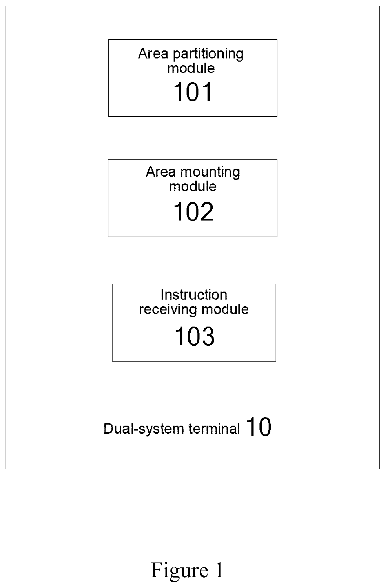

Figure 1 is a structural diagram showing a dual-system terminal according to an embodiment of the present disclosure. Referring to Figure 1, a dual-system terminal 10 includes an area partition module 101, an area mounting module 102 and an instruction receiving module 103. The area partition module 101 is configured to partition a data storage area of the dual-system terminal 10 into a secure storage area and a normal storage area according to a preset rule. The area mounting module 102 is configured to mount the secure storage area and the normal storage area when being operated in a secure system and to mount the normal storage area when being operated in a normal system. The instruction receiving module 103 is configured to receive an operation instruction, issued by the user in the secure system, of performing data reading/writing in the secure storage area and normal storage area; or, to receive an operation instruction, issued by the user in the normal system, of performing data reading/writing in the normal storage area.

Specifically, one system of the dual-system terminal is the secure system, and the other system is the normal system. The manner of setting the secure system includes: setting one of the two systems of the dual-system terminal 10 to be the secure system when the dual-system terminal 10 is manufactured, or dividing the two systems into the secure system and the normal system by the user by means of setting password or fingerprint identification. When the user needs to operate in the secure system, it is required to perform a password authentication or fingerprint identification to access the secure system. Thus, the dual-system terminal 10 has safety in the operation system. The data storage area of the dual-system terminal 10 includes: an external storage card and/or built-in memory disposed in the dual-system terminal 10. The external storage card includes a Secure Digital Memory (SD) card or Trans-flash (TF) card and the like. The built-in memory is a non-running memory of the dual-system terminal 10, and includes a Read Only Memory (ROM) or hard disk. The data storage area of the dual-system terminal 10 can be partitioned by the area partition module 101 according to a plurality of modes. For example, the data storage area of the dual-system terminal 10 can be directly partitioned into the secure storage area and the normal storage area according to a space size. Optionally, only the external SD card or built-in non-running memory and the like are partitioned into the secure storage area and the normal storage area, for example being partitioned equally and the like. The data storage area of the dual-system terminal 10 may also be partitioned according to storage spaces required by each area, which are inputted by the user. After the data storage area is partitioned into the secure storage and the normal storage area, both the secure storage and normal storage area can be mounted in the secure system, while only the normal storage area can be mounted in the normal system. As a result, the instruction receiving module 103 can receive the operation instruction of data reading/writing performed by the user in the secure storage area and normal storage area when being in the secure system currently, while can merely receive the operation instruction of data reading/writing performed by the user in the normal storage area when being in the normal system currently. By such settings, the data in the secure storage area of the dual-system terminal 10 is protected in a certain extent. The user cannot perform the reading/writing operations on the data in the secure storage area if the user fails to log in the secure system of the dual-system terminal 10. As a result, important files, pictures, videos and the like can be stored into the secure storage area by the user and thus are not easily to be revealed. The dual-system terminal 10 includes but not limited to phones or tablets.

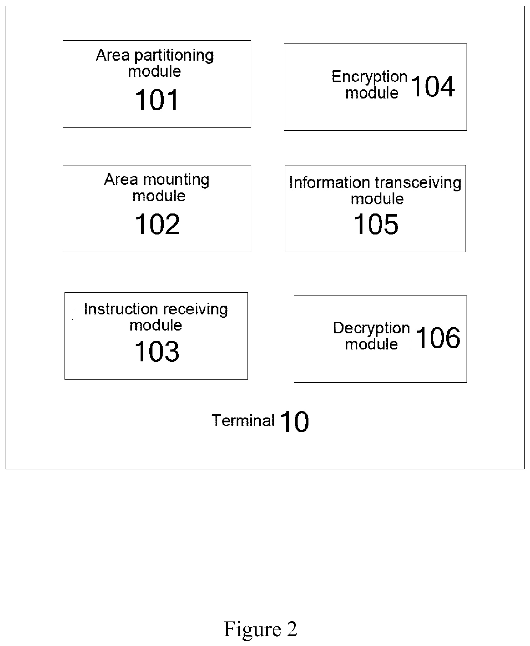

Figure 2 is a structural diagram showing a dual-system terminal according to another embodiment of the present disclosure. Referring to Figure 2, the dual-system terminal 10 further includes an encryption module 104, an information transceiving module 105 and a decryption module 106. The encryption module 104 is configured to encrypt the secure storage area, and transmit encrypted password information to an account corresponding to the dual-system terminal 10 in a cloud information management platform. The account of the dual-system terminal stores the received password information into a storage area thereof. The information transceiving module 105 is configured to transmit a request for password information to the cloud information management platform and receive the password information transmitted from the cloud information management platform. The decryption module 106 is configured to decrypt the secure storage area according to the password information received by the information transceiving module. The instruction receiving module 103 is further configured to receive an operation instruction of data reading/writing performed by the user in the secure storage area if the secure storage area is decrypted by the decryption module 106 successfully. The solution of main settings thereof is as follows: a password for accessing the secure storage area is set by the user independently, and then sent to the account corresponding to the dual-system terminal 10 in the cloud information management platform. Herein, the password is stored in the storage area of the account corresponding to the dual-system terminal 10, so as to perform an operation such as decryption operation with the password stored in the account if the user forgets the password, thereby facilitating the user to use. In the present embodiment, the data stored in the secure storage area is further protected by encrypting the secure storage area. Thus, a user may not always perform data reading/writing in the secure storage area even though the user is able to access the secure system of the dual-system terminal 10. An additional protection barrier is founded for the data stored in the secure storage area of the dual-system terminal 10 of the user.

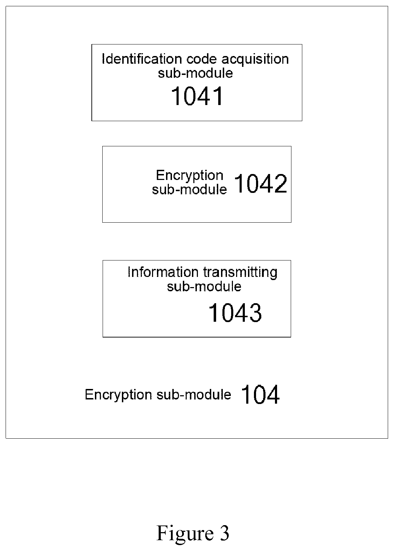

Figure 3 is a structural diagram showing an encryption module according to an embodiment of the present disclosure. Referring to Figure 3, the encryption module 104 specifically includes: an identification code acquisition sub-module 1041, configured to acquire an identification code of the data storage area corresponding to the secure storage area; an encryption sub-module 1042, configured to encrypt the secure storage area by taking the identification code acquired by the identification code acquisition sub-module 1041 as the password of the secure storage area; an information transmitting sub-module 1043, configured to transmit the identification code acquired by the identification code acquisition sub-module 1041 to the account corresponding to the dual-system terminal 10 in the cloud information management platform as the password information. The decryption module 106 is specifically configured to acquire the identification code of the data storage area corresponding to the secure storage area, and compare the identification code with the password information received by the information transceiving module 105. If the identification code and the password information received by the information transceiving module 105 are identical, the decryption is done successfully. In the present embodiment, the secure storage area is encrypted in a manner of password by utilizing a unique identification code (CID number) of the data storage area corresponding to the secure storage area of the dual-system terminal 10, so that the encrypted content relates to the own nature of the secure storage area. Therefore, it is further harder for other people to crack contents of the key, and the privacy of the user is further protected. Specifically, if the secure storage area is a partition of a storage card external to the dual-system terminal 10, the CID number of the storage card is acquired firstly, then the secure storage area is encrypted by taking the CID number as the password, and the password is served as the password information and stored in the storage area of the account corresponding to the dual-system terminal 10 in the cloud information management platform. When it is required to perform a reading/writing operation on the secure storage area, the secure storage area may be authenticated by directly logging in the account of the dual-system terminal, or may be decrypted by directly inputting the CID number by the user. However, since the CID numbers of the data storage area are generally complex, it is hard for the user to remember these numbers. Therefore, it is more convenient to use the accounts stored in the dual-system terminal 10, and the security thereof is much more guaranteed.

In another embodiment, the information transceiving module 105 is further configured to transmit a request for updating information to the account corresponding to the dual-system terminal 10 in the cloud information management platform. Specifically, a login name of the account corresponding to the dual-system terminal 10 in the cloud information management platform is the identification information of the terminal 10. After an external terminal logs in the account of the dual-system terminal 10 via the identification information of the dual-system terminal 10 and modifies or deletes any information in the account, the modified or deleted contents will be synchronously updated immediately due to constantly receiving the request for updating information sent by the information transceiving module 105. The account corresponding to the dual-system terminal 10 in the cloud information management platform is bound to the dual-system terminal through a Mobile Equipment Identifier (MEID) of the dual-system terminal, that is, each dual-system terminal merely has one account and the account of each dual-system terminal can be logged in and processed through an external terminal. In the present embodiment, the account of the dual-system terminal 10 can be logged in through the external terminal, and operations such as modification or deletion can be performed on the information stored in the account. As a result, after the information of the account is updated, the information on the account is the information subjected to the last process by the user. For example, when the user is at the dual-system terminal 10, the CID number corresponding to the secure storage area is taken as an access password of the dual-system terminal 10, and the password is served as the password information and stored into the account. If the dual-system terminal 10 is lost in this case, the user can log in a cloud account of the dual-system terminal 10 via another external terminal and modify or delete the password information stored in the account in the dual-system terminal 10, so as to prevent the contents in the secure storage area of the dual-system terminal 10 from being snooped on by other people. Meanwhile, an account updating module in the dual-system terminal 10 will also update the information in the account in the first time, so that a user who finds the dual-system terminal 10 is not able to easily access the secure storage area and perform operations such as data access, thereby guaranteeing data security for the user.

According to the dual-system terminal in the present embodiment, the data storage area in the dual-system terminal is partitioned into the secure storage area and the normal storage area. Moreover, the reading/writing operation can only be performed on the normal storage area when being in a normal system, and the reading/writing operation can be performed on the secure storage area only when being in a secure system. A barrier is provided for privacy contents the user wants to protect, thus the privacy of the user is prevented from being revealed and the data security of the user terminal is guaranteed.

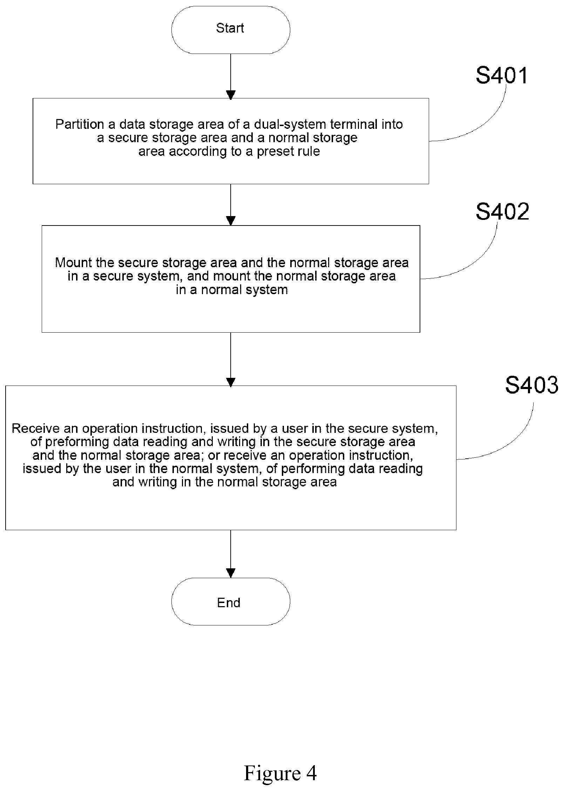

Figure 4 is a flowchart showing a data reading/writing method of the dual-system terminal according to an embodiment of the present disclosure. Referring to Figure 4, the method includes steps described below.

In S401, a data storage area in the dual-system terminal is partitioned into a secure storage area and a normal storage area according to a preset rule. It should be noted that one system of the dual-system terminal is a secure system and the other system of the dual-system terminal is a normal system. Specifically, differention of the secure system and the normal system may be set when the dual-system terminal was manufactured. Optionally, the two systems of the dual-system terminal 10 are differentiated as the secure system and the normal system by the user through setting a password for one of the systems in the dual-system terminal or by means of fingerprint identification or direct conversions. When the user needs to access the secure system, it is required to perform a password authentication or fingerprint identification to access the secure system. Thus, a relative safe operation system exists in the dual-system terminal, and an additional protection is made for protecting the contents of the secure system. The data storage area in the dual-system terminal includes: an external storage card and/or built-in memory provided in the dual-system terminal. The external storage card includes a SD card or TF card and the like. The built-in memory is a non-running memory of the terminal, and includes a ROM or hard disk. The data storage area in the dual-system terminal can be partitioned according to a plurality of modes. For example, the data storage area in the dual-system terminal can be partitioned into the secure storage area and the normal storage area according to a space size. For example, the external SD card of the dual-system terminal is partitioned into the secure storage area and the normal storage area by an equal division. The data storage area of the dual-system terminal may also be partitioned according to storage spaces required by each area, which are inputted by the user.

In S402, both the secure storage area and the normal storage area are mounted when the dual-system terminal is operated in the secure system, while the normal storage area is mounted when the dual-system terminal is operated in the normal system. After the data storage area is partitioned into the secure storage area and the normal storage area, both the secure storage area and normal storage area can be mounted in the secure system, while only the normal storage area can be mounted in the normal system. As a result, in the normal system, the reading/writing operation cannot be performed on any storage space of the dual-system terminal, thus the operation space is restricted and the security of user's privacy is guaranteed.

In S403, an operation instruction, issued by the user in the secure system, of performing data reading/writing in the secure storage area and the normal storage area is received, or an operation instruction, issued by the user in the normal system, of performing data reading/writing in the normal storage area is received. The operation instruction, issued by the user, of performing data reading/writing in the secure storage area and the normal storage area can be received if the dual-system terminal is in the secure system currently, while only the operation instruction, issued by the user, of performing data reading/writing in the normal storage area can be received if the dual-system terminal is in the normal system currently. By such settings, the data in the secure storage area in the terminal is protected in a certain extent. A user is not capable of performing reading/writing operations on the data in the secure storage area if the user fails to log in the secure system of the terminal. As a result, important files, pictures, videos and the like can be stored into the secure storage area in the terminal by the user, and thus are not easily to be revealed.

After the data storage area in the dual-system terminal is partitioned into the secure storage area and the normal storage area according to the preset rule in S401, the method further includes: encrypting the secure storage area and transmitting an encrypted password information to an account corresponding to the dual-system terminal in a cloud information management platform, where the account corresponding to the dual-system terminal stores the received password information into the storage area thereof. Before performing data reading/writing operation in the secure storage area, the method further includes: transmitting a request for password information to the cloud information management platform and receiving the password information transmitted from the cloud information management platform; decrypting the secure storage area according to the password information, and performing data reading/writing in the secure storage area if the secure storage area is decrypted successfully. The solution of main settings is as follows: a password for accessing the secure storage area is set by the user independently, and then stored in a storage area of the account corresponding to the dual-system terminal in the cloud information management platform. Herein, the password is stored in the account corresponding to the dual-system terminal, so as to perform an operation such as decryption operation with the password stored in the account if the user forgets the password, thereby facilitating the user to use. In the present embodiment, the data stored in the secure storage area is further protected by encrypting the secure storage area. Thus, a user may not always perform data reading/writing in the secure storage area even though the user is able to access the secure system of the dual-system terminal. An additional protection barrier is founded for the data stored in the secure storage area of the dual-system terminal of the user.

Further, the step of encrypting the secure storage area and transmitting the encrypted password information to the account corresponding to the dual-system terminal in the cloud information management platform specifically includes: acquiring an identification code of a data storage area corresponding to the secure storage area; encrypting the secure storage area by taking the identification code as the password of the secure storage area; transmitting the password of the secure storage area to the account corresponding to the dual-system terminal in the cloud information management platform as password information. Before data reading/writing operations is performed in the secure storage area and normal storage area, the method further includes: acquiring the identification code of the secure storage area; transmitting a request for the password information to the cloud information management platform and receiving the password information transmitted from the cloud information management platform; and comparing the identification code with the password information, if the identification code and the password information are identical, the secure storage area is decrypted. In the present embodiment, the secure storage area is encrypted by utilizing the unique identification code (CID number) of the data storage area corresponding to the secure storage area in the dual-system terminal, so that the encrypted content relates to the own nature of the secure storage area. Therefore, it is further harder for other people to crack the content of the key, and the privacy of the user is further protected. Specifically, if the secure storage area is a partition of a storage card external to the dual-system terminal, the CID number of the storage card is acquired firstly, then the secure storage area is encrypted by taking the CID number as the password, and the password is served as the password information and stored in the storage area of the account corresponding to the dual-system terminal in the cloud information management platform. When it is required to perform a reading/writing operation in the secure storage area, the secure storage area may be authenticated by directly logging in the account of the dual-system terminal, or may be decrypted by directly inputting the CID number by the user. However, since the CID numbers of the data storage area are generally complex, it is hard for the user to remember these numbers. Therefore, it is more convenient to use the accounts stored in the dual-system terminal, and the security thereof is much more guaranteed.

In addition, the method further includes: transmitting a request for updating information to the account corresponding to the dual-system terminal in the cloud information management platform. The login name of the account corresponding to the dual-system terminal is the identification information of the dual-system terminal. After an external terminal logs in the account corresponding to the dual-system terminal via the identification information of the dual-system terminal and modifies or deletes information stored in the account, the modified or deleted information will be synchronously updated in the first time. The account corresponding to the dual-system terminal is bounded to the dual-system terminal through a Mobile Equipment Identifier (MEID) of the dual-system terminal, that is, each dual-system terminal merely has one account in the cloud information management platform, and the account of each dual-system terminal can be logged in and processed through an external terminal. In the present embodiment, the account of the dual-system terminal can be logged in through the external terminal, and operations such as modification or deletion can be performed on the information stored in the storage area of the account. As a result, after the contents of the account are updated, the contents on the account are contents subjected to the last process by the user. For example, when the user is at the dual-system terminal, the CID number corresponding to the secure storage area is taken as an access password of the dual-system terminal, and the password is served as the password information and stored into the account corresponding to the dual-system terminal in the cloud information management platform. If the dual-system terminal is lost, the user can log in the account of the dual-system terminal via another external terminal and modify or delete the password information stored in the account in the dual-system terminal, so as to prevent the contents in the secure storage area of the dual-system terminal from being snooped on by other people. Meanwhile, the dual-system terminal will also update the contents in the account in the first time, so that a user who finds the dual-system terminal is not able to easily access the secure storage area and perform operations such as data access, thereby guaranteeing data security for the user.

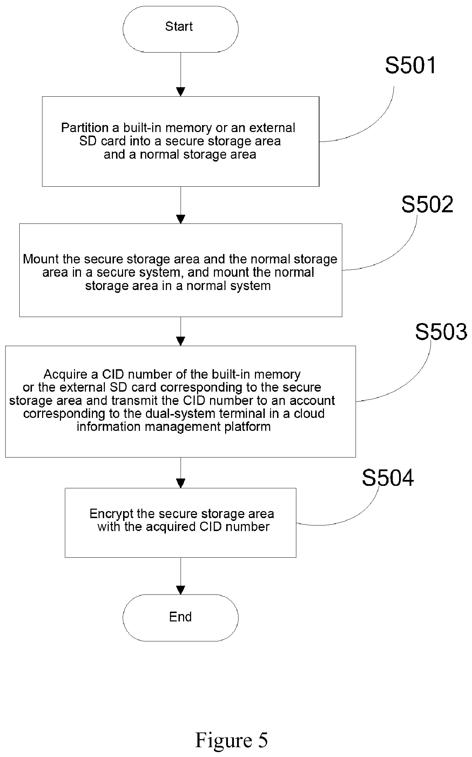

For example, as shown in Figure 5, Figure 5 is a flowchart showing a method for encrypting the secure storage area according to an embodiment of the present disclosure. Referring to Figure 5, the method includes steps described below.

In S501, a built-in memory or an external SD card is partitioned into a secure storage area and a normal storage area.

In S502, both the secure storage area and the normal storage area are mounted when the dual-system terminal is operated in the secure system, while the normal storage area is mounted when the dual-system terminal is operated in the normal system.

In S503, a CID number of the built-in memory or the external SD card corresponding to the secure storage area is acquired and transmitted to the account corresponding to the dual-system terminal in the cloud information management platform.

In S504, the secure storage area is encrypted with the acquired CID number.

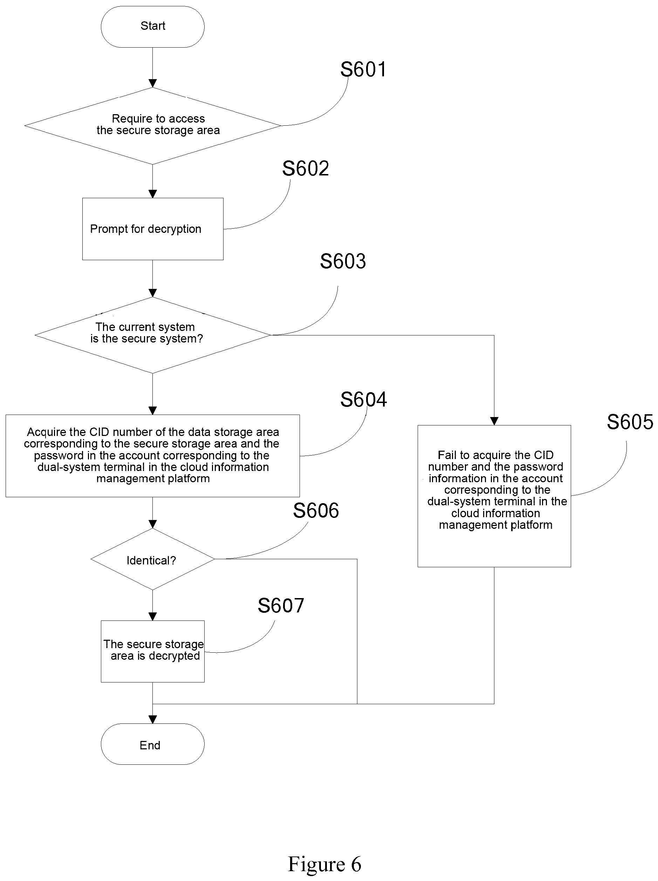

Figure 6 is a flowchart showing a method for decrypting the secure storage area after the secure storage area is encrypted according to an embodiment of the present disclosure. Referring to Figure 6, the method includes steps described below.

In S601, it is determined whether it is required to access the secure storage area. If it is required to access the secure storage area, the process proceeds to S602. If it is not required to access the secure storage area, the secure storage area is directly accessed.

In S602, it is prompted that a decryption is required.

In S603, it is determined whether the current system is the secure system. The process proceeds to S604 if the current system is the secure system, and proceeds to S605 if the current system is not the secure system.

In S604, the CID number of the data storage area corresponding to the secure storage area and the password in the account corresponding to the dual-system terminal in the cloud information management platform are acquired.

In S605, the CID number and the password information in the account corresponding to the dual-system terminal in the cloud information management platform cannot be acquired.

In S606, it is determined whether the CID number and the password are identical. If the CID number and the password are identical, the process proceeds to S607. If the CID number and the password are not identical, the method is ended.

In S607, the secure storage area is decrypted successfully, and data reading/writing operation can be performed on the secure storage area.

The present embodiment principally provides a data reading/writing method of a dual-system terminal. The main features are: the data storage area in the dual-system terminal is partitioned into the secure storage area and the normal storage area, reading/writing operation on the secure storage area is only performed in the secure system, while only reading/writing operation on the normal storage area is allowed in the normal system. As a result, the data stored in the secure storage area in the dual-system terminal of the user is protected, and a strong protecting barrier is provided for the privacy of the user.

The present disclosure provides a data reading/writing method of a dual-system terminal and a dual-system terminal. The systems of the dual-system terminal is classified as a secure system and a normal system, and the data storage area thereof is partitioned into a secure storage area and a normal storage area according to a preset rule, and mounting of the secure storage area and normal storage area can be achieved in the secure system, while only normal storage area can be mounted in the normal system. As a result, the user can perform data reading/writing operation on both secure storage area and normal storage area in the secure system, while the user can only perform data reading/writing operation on the normal storage area in the normal system. Thus, it is realized that in a dual-system terminal, the data reading/writing operation cannot be performed in the normal system on the secure storage area of the secure system due to the difference of the secure system and the normal system, and the revealing of user's privacy is prevented. At the same time, the data reading/writing between systems of the dual-system terminal is realized, and the user's experience is improved.

Above contents are further detailed descriptions of the present disclosure in combination with specific embodiments, specific embodiments of the present disclosure are not limited to these descriptions. Simple developments or substitutions may be made by those skilled in the art without departing from the concept of the present disclosure, and should be included in the protection scope of the present disclosure.

## Claims

1. A dual-system terminal, comprising:
an area partitioning module, configured to partition a data storage area of the dual-system terminal into a secure storage area and a normal storage area according to a preset rule,
an area mounting module, configured to mount the secure storage area and the normal storage area in a secure system, and mount the normal storage area in a normal system; and
an instruction receiving module, configured to receive an operation instruction, issued by a user in the secure system, of performing data reading and writing in the secure storage area and the normal storage area; or, to receive an operation instruction, issued by the user in the normal system, of performing data reading and writing in the normal storage area.

2. The dual-system terminal according to claim 1, further comprising:
an encryption module, configured to encrypt the secure storage area, and transmit encrypted password information to an account corresponding to the dual-system terminal in a cloud information management platform to save;
an information transceiving module, configured to transmit a request for password information to the cloud information management platform, and receive the password information transmitted from the cloud information management platform; and
a decryption module, configured to decrypt the secure storage area according to the password information received by the information transceiving module;
wherein the instruction receiving module is further configured to receive an operation instruction, issued by the user, of performing data reading and writing in the secure storage area if the secure storage area is decrypted by the decryption module.

3. The dual-system terminal according to claim 2, wherein the encryption module specifically comprises:
an identification code acquisition sub-module, configured to acquire an identification code of a data storage area corresponding to the secure storage area;
an encryption sub-module, configured to encrypt the secure storage area by taking the identification code acquired by the identification code acquisition sub-module as a password of the secure storage area; and
an information transmitting sub-module, configured to transmit the identification code acquired by the identification code acquisition sub-module to the account corresponding to the dual-system terminal in the cloud information management platform as the password information,
wherein the decryption module is specifically configured to acquire the identification code of the data storage area corresponding to the secure storage area, and compare the identification code with the password information received by the information transceiving module, wherein the secure storage area is descripted if the identification code and the password information are identical.

4. The dual-system terminal according to claim 2 or claim 3, wherein the information transceiving module is further configured to transmit a request for updating information to the account corresponding to the dual-system terminal in the cloud information management platform.

5. The dual-system terminal according to any one of claims 1 to 3, wherein the data storage area includes an external storage card and/or a built-in storage area disposed in the terminal.

6. A data reading and writing method of a dual-system terminal, comprising:
partitioning a data storage area of the dual-system terminal into a secure storage area and a normal storage area according to a preset rule;
mounting the secure storage area and the normal storage area in a secure system, and mounting the normal storage area in a normal system;
receiving an operation instruction, issued by a user in the secure system, of performing data reading and writing in the secure storage area and the normal storage area; or, receiving an operation instruction, issued by the user in the normal system, of performing data reading and writing in the normal storage area.

7. The data reading and writing method of the dual-system terminal according to claim 6, wherein after the step of partitioning a data storage area of the dual-system terminal into a secure storage area and a normal storage area according to a preset rule, the method further comprises: encrypting the secure storage area and transmitting an encrypted password information to an account corresponding to the dual-system terminal in a cloud information management platform to save,
before performing a data reading and writing operation in the secure storage area, the method further comprises: transmitting a request for password information to the cloud information management platform and receiving the password information transmitted from the cloud information management platform; and decrypting the secure storage area according to the password information, and performing an operation of data reading and writing in the secure storage area if the secure storage area is decrypted.

8. The data reading and writing method of the dual-system terminal according to claim 7, wherein the step of encrypting the secure storage area and transmitting an encrypted password information to an account corresponding to the dual-system terminal in a cloud information management platform specifically comprises: acquiring an identification code of a data storage area corresponding to the secure storage area; encrypting the secure storage area by taking the identification code as a password of the secure storage area; and transmitting the password of the secure storage area to the account corresponding to the dual-system terminal in the cloud information management platform as the password information;
before performing a data reading and writing operation in the secure storage area and the normal storage area, the method further comprises: acquiring an identification code of the secure storage area; transmitting a request for password information to the cloud information management platform and receiving the password information transmitted from the cloud information management platform; and comparing the identification code with the password information, wherein the secure storage area is decrypted if the identification code and the password information are identical.

9. The data reading and writing method of the dual-system terminal according to claim 7 or claim 8, further comprising:
transmitting a request for updating information to the account corresponding to the dual-system terminal in the cloud information management platform.

10. The data reading and writing method of the dual-system terminal according to any one of claims 6 to 8, wherein the data storage area specifically comprises an external storage card and/or a built-in storage area disposed in the dual-system terminal.
